# EUROPÄISCHE PATENTANMELDUNG

(11) **EP 0 894 662 A2**
(43) Veröffentlichungstag der Anmeldung: **03.02.1999**
(21) Anmeldenummer: 98105079.2
(22) Anmeldetag: 20.03.1998
(51) Int. Cl.: B60N 3/08

(54) **Behältnis, wie Ascher, Ablagefach oder dgl., Fahrzeuge**

(30) Priorität: 31.07.1997 DE 19732980
(71) Anmelder: Johnson Controls Interiors GmbH, 42285 Wuppertal (DE)
(72) Erfinder: Nowak, Manfred, 42659 Solingen (DE); Grünzner, Elke, 42113 Wuppertal (DE); Gänssler, Roland, 42349 Wuppertal (DE)

(57) **Zusammenfassung**

Beschrieben wird ein Behältnis, wie Ascher, Ablagefach oder dgl. für Fahrzeuge, bestehend aus einem Gehäuse (1), einem Deckel (2), der längs einer Randkante am Gehäuse (1) angelenkt und mit zumindest einem gebogenen Führungsarm (9) das Gehäuse (1) übergreift, sowie aus einer lösbaren Rasteinrichtung, um den Deckel (2) gegen die Kraft einer Öffnungsfeder (5) in der das Gehäuse (1) abdeckenden Schließstellung zu halten, wobei die Rasteinrichtung, die durch Einwirken auf den Deckel (2) betätigbar ist, eine am Führungsarm (9) angeordnete herzförmige, als Kulissennut ausgebildete Steuerkurve (10) aufweist, an der ein an einem gehäuseseitigen Gelenkhebel (6) angeordneter Bolzen (7) einrastbar anliegt. Bei diesem Behältnis ist erfindungsgemäß vorgesehen, daß am Gehäuse (1) eine auf eine extreme Geschwindigkeitsänderung reagierende Blockiereinrichtung angeordnet ist, die den Gelenkhebel (6) daran hindert, seine den Deckel (2) in der Schließstellung haltende Position aufzugeben.

## Beschreibung

Die Erfindung bezieht sich auf ein Behältnis, wie Ascher, Ablagefach oder dgl., für Fahrzeuge, bestehend aus einem Gehäuse, einem Deckel, der längs einer Randkante am Gehäuse angelenkt und mit zumindest einem gebogenen Führungsarm das Gehäuse übergreift, sowie aus einer lösbaren Rasteinrichtung, um den Deckel gegen die Kraft einer Öffnungsfeder in der das Gehäuse abdeckenden Schließstellung zu halten, wobei die Rasteinrichtung, die durch Einwirken auf den Deckel betätigbar ist, eine am Führungsarm angeordnete herzförmige, als Kulissennut ausgebildete Steuerkurve aufweist, an der ein an einem gehäuseseitigen Gelenkhebel angeordneter Bolzen einrastbar anliegt.

Bei bekannten Behältnissen, insbesondere Aschern wird als Rasteinrichtung im allgemeinen ein zweistufiges Richtgesperre verwendet, wie es seit langem von einer Kugelschreibermechnik her bekannt ist. Solche Behältnisse erfreuen sich wegen ihrer leichten und einfachen Bedienbarkeit (Tip-Automatik) einer zunehmenden Beliebtheit. Bei den Behältnissen mußte jedoch im praktischen Gebrauch ein unliebsamer Nachteil festgestellt werden, der darin bestand, daß die Ascherlade oder der Deckel nicht zuverlässig in der Schließstellung verharrt, wenn das Behältnis extremen Geschwindigkeitsänderungen ausgesetzt wurde. Solche Geschwindigkeitsänderungen ergeben sich aber für ein Behältnis für Fahrzeuge schon beim normalen Fahrbetrieb, beispielsweise beim Durchfahren tiefer Schlaglöcher, harter Bodenwellen und ähnlichem, insbesondere aber auch bei Unfällen mit abrupten Geschwindigkeitsänderungen. Auch der Staudruck (Verzögerungsimpuls) durch heftiges Türzuschlagen kann zu einem ungewollten Öffnen der Rasteinrichtung führen.

Durch die DE 39 30 271 A1 ist ein Ascher für Kraftfahrzeuge, bestehend aus einem in einer Wandaussparung befestigbaren Gehäuse mit einer darin beweglich gelagerten Ascherlade, die aus einer Nichtgebrauchsstellung nach dem Lösen einer Verriegelung durch die Kraft einer Öffnungsfeder in eine Gebrauchsstellung bewegbar ist, wobei die Verriegelung durch geringfügiges Eindrücken der Ascherschale gegen die Kraft der Öffnungsfeder lösbar und die Ascherlade sodann durch die Öffnungsfeder in einer dem Eindrücken entgegengesetzten Richtung in die Gebrauchsstellung bewegbar ist, bekanntgeworden. Bei diesem Ascher wurde, um ein ungewolltes Öffnen der Ascherlade zu vermeiden, zumindest eine die Öffnungsfeder unterstützende Zusatzfeder vorgesehen. Durch die Zusatzfeder wird das ein Lösen der Verriegelung bewirkende Eindrücken der Ascherlade und damit auch ein ungewolltes Lösen der Ascherladen-Verriegelung erschwert.

Der Erfindung liegt nun die Aufgabe zugrunde, ein Behältnis der eingangs genannten Art zur Verfügung zu stellen, bei dem ein ungewolltes Lösen der Rasteinrichtung durch einfache, zuverlässig wirkende Mittel, ohne Erhöhung der auf den Deckel zum Zwecke der Entriegelung auszuübenden Betätigungskraft, gewährleistet ist.

Zur Lösung dieser Aufgabe ist erfindungsgemäß vorgesehen, daß am Gehäuse eine auf eine extreme Geschwindigkeitsänderung reagierende Blockiereinrichtung angeordnet ist, die den Gelenkhebel daran hindert, seine den Deckel in der Schließstellung haltende Position aufzugeben.

Bevorzugterweise besteht die Blockiereinrichtung aus einem einarmigen Hebei, der einendig um eine parallel zur Achse des Gelenkhebels ausgerichtete Achse gegen die Kraft einer Haltefeder drehbar und unter Einwirkung einer extremen Geschwindigkeitsänderung von einer schräg zum Gelenkhebel ausgerichteten Ruhelage in eine senkrecht zum Gelenkhebel ausgerichtete und sich mit seinem freien Ende daran abstützende Blockierlage schwenkbar ist.

Die genannte Blockiereinrichtung besteht somit aus einem kleinen, am Gehäuse angelenkten Hebel und aus einer den Hebel in Ruheposition haltenden Feder, deren Kraft aber nicht ausreicht, um einem Hebelausschlag bei abrupter Geschwindigkeitsänderung entgegenzuwirken. Es versteht sich, daß eine solche Blockiereinrichtung bei einem Behältnis der in Rede stehenden Art kostenmäßig nicht ins Gewicht fallt und dennoch die gestellte Aufgabe in optimaler Weise löst.

Das freie Ende des einarmigen Hebels kann in Ausgestaltung der Erfindung hammerkopfartig ausgebildet sein mit einem nach unten gerichteten Gewichtsschwerpunkt.

Ein Ausführungsbeispiel der Erfindung wird nachfolgend anhand der Zeichnungen näher erläutert, und es zeigen:
- Fig. 1: ein Behältnis mit geschlossenem Deckel und
- Fig. 2: das Behältnis nach Fig. 1 mit geöffnetem Deckel.

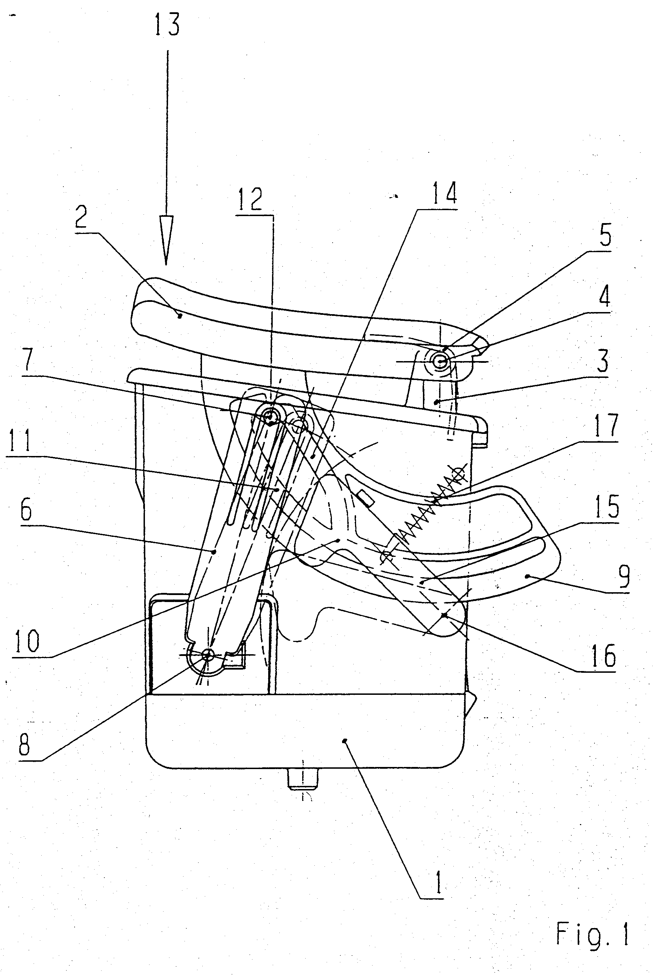

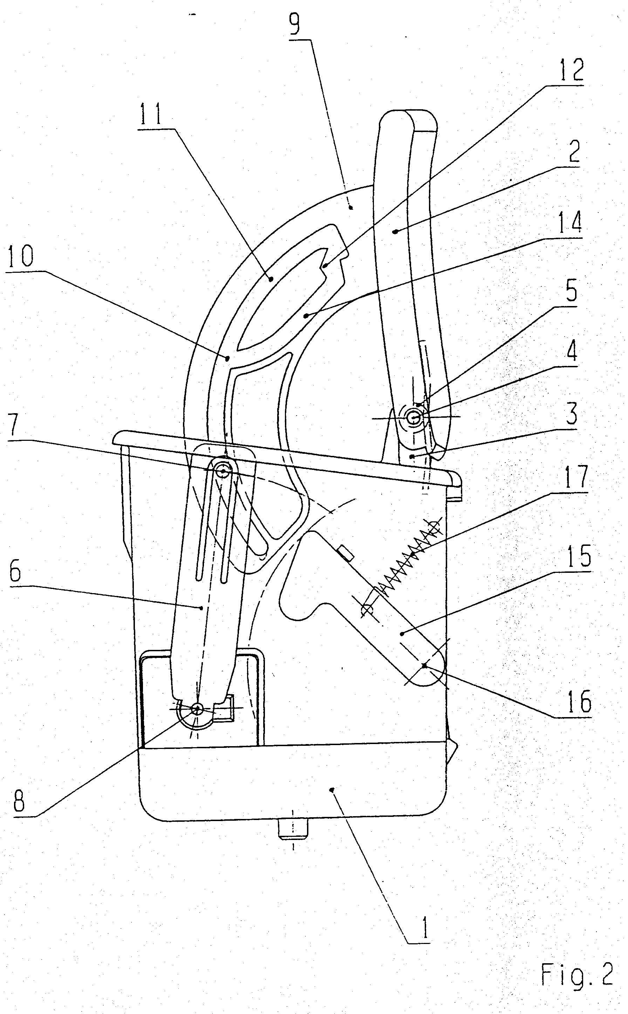

Bei dem dargestellten Behältnis kann es sich um einen Ascher, ein Ablagefach, einen Becherhalter, ein Brillenfach und ähnliches für Fahrzeuge handeln. Das Behältnis besteht aus einem kastenförmigen Gehäuse 1 und aus einem die Gehäuseöffnung bei Nichtgebrauch verschließenden Deckel 2. Das Gehäuse 1 ist an einem Randbereich mit überstehenden Lagerböcken 3 ausgebildet, die eine den Deckel 2 tragende Achse 4 lagern. Die Achse 4 trägt weiterhin eine gestrichelt angedeutete Schenkelfeder 5, die als Öffnungsfeder dient und bestrebt ist, den Deckel 2 aus seiner Schließstellung nach Fig. 1 in seine Offenstellung nach Fig. 2 zu überführen.

Zum Behälter gehört weiterhin eine lösbare Rasteinrichtung, um den Deckel 2 gegen die Kraft der Schenkelfeder 5 in der Schließstellung zu halten. Die Rasteinrichtung umfaßt einen am Gehäuse 1 an einem Achszapfen 8 angeordneten Gelenkhebel 6, der am freien Endbereich einen Bolzen 7 aufweist. Die Rasteinrichtung umfaßt weiterhin einen am Deckel 2 angeordneten gebogenen Führungsarm 9, der sich parallel zur dem Betrachter zugewandten Wand des Gehäuses 1 erstreckt und eine mit dem Bolzen 7 des Gelenkhebels 6 zusammenwirkende herzförmige, als Kulissennut ausgebildete Steuerkurve 10 aufweist. Beim Schließen des Deckels 2 durchläuft der Bolzen 7 den auf der Zeichnung linken Pfad 11 der Steuerkurve 10 um am Ende des Pfades 11 in eine als Rastposition dienende Ausformung 12 einzufallen, in der er durch die Kraft der auf den Deckel 2 einwirkenden Schenkelfeder 5 gehalten wird. Um den Deckel 2 wieder zu öffnen, muß er geringfügig in Richtung des Pfeils 13 beaufschlagt werden, wodurch der Bolzen 7 aus der Ausformung 12 herausgedrückt und in den auf der Zeichnung rechten Pfad 14 der Steuerkurve 10 gezwungen wird. Nach einem Antippen des Deckels 2 in Pfeilrichtung 13 erfolgt die Öffnungsbewegung durch die auf den Deckel 2 einwirkende Schenkelfeder 5. Damit die Öffnungsbewegung des Deckels 2 nicht schlagartig erfolgt, weist der Führungsarm 9 rückseitig eine nicht dargestellte zahnstangenartige Verzahnung auf, die mit dem Ritzel einer nicht dargestellten Bremse kämmt.

Bei einer auf das Behältnis abrupt einwirkenden Geschwindigkeitsänderung (Schnuckbewegung) kann ein Auslösen der Rasteinrichtung durch eine ungewollte Deckelbewegung in Pfeilrichtung 13 selbsttätig erfolgen, weil schon eine geringfügige Deckelbewegung den Öffnungsimpuls auslost. Um ein ungewolltes Öffnen des Deckels 2 zu verhindern, ist nun vorgesehen, den Gelenkhebel 6 zu blockieren, damit er nicht in die strichpunktiert dargestellte Position ausschwenken und der Bolzen 7 nicht in den rechten Pfad 14 der Steuerkurve 10 gelangen kann. Hierfür ist an der auch den Gelenkhebel 6 lagernden Wand des Gehäuses 1 ein einarmiger Hebel 15 angeordnet, der einendig um eine parallel zur Achse 8 des Gelenkhebels 6 ausgerichteten Achse 16 drehbar ist. Der Hebel 15 wird durch eine Feder 17 in seiner mit ausgezogenen Linien dargestellten Ruhelage, in der er schräg zum Gelenkhebel 6 ausgerichtet ist, gehalten. Für das gewollte Öffnen und Schließen des Deckels 2, also die bestimmungsgemäße Nutzung des Behältnisses spielt der Hebel 15 überhaupt keine Rolle. Der Hebel 15 tritt erst dann in Funktion, wenn auf das Behältnis eine extreme Geschwindigkeitsänderung einwirkt, die ihn veranlaßt, von seiner schräg zum Gelenkhebel 6 ausgerichteten Ruhelage in eine mit strichpunktierten Linien dargestellte, senkrecht zum Gelenkhebel 6 ausgerichtete Gebrauchslage zu schwenken und sich dabei mit seinem freien Ende am Gelenkhebel 7 abzustützen. Dadurch wird der Gelenkhebel 6 blockiert und vermag nicht auf einen vom Deckel 2 ausgehenden Öffnungsimpuls zu reagieren. Es ist einleuchtend, daß der Hebel 15 auf eine Geschwindigkeitsänderung wesentlich schneller reagieren kann als die ihm gegenüber doch träge Öffnungsmechanik des Deckels 2. Der Gewichtsschwerpunkt des Hebels 15 liegt an seinem freien Endbereich was durch eine hier vorgesehene Materialanhäufung in Form einer hammerkopfartigen Ausbildung realisiert ist.

## Patentansprüche

1. Behältnis, wie Ascher, Ablagefach oder dgl. für Fahrzeuge, bestehend aus einem Gehäuse (1), einem Deckel (2), der längs einer Randkante am Gehäuse (1) angelenkt und mit zumindest einem gebogenen Führungsarm (9) das Gehäuse (1) übergreift, sowie aus einer losbaren Rasteinrichtung, um den Deckel (2) gegen die Kraft einer Öffnungsfeder (5) in der das Gehäuse (1) abdeckenden Schließstellung zu halten, wobei die Rasteinrichtung, die durch Einwirken auf den Deckel (2) betätigbar ist, eine am Führungsarm (9) angeordnete herzförmige, als Kulissennut ausgebildete Steuerkurve (10) aufweist, an der ein an einem gehäuseseitigen Gelenkhebel (6) angeordneter Bolzen (7) einrastbar anliegt, dadurch gekennzeichnet, daß am Gehäuse (1) eine auf eine extreme Geschwindigkeitsänderung reagierende Blockiereinrichtung angeordnet ist, die den Gelenkhebel (6) daran hindert, seine den Deckel (2) in der Schließstellung haltende Position aufzugeben.

2. Behältnis nach Anspruch 1, dadurch gekennzeichnet, daß die Blockiereinrichtung als einarmiger Hebel (15) ausgebildet ist, der einendig um eine parallel zur Achse (8) des Gelenkhebels (6) ausgerichtete Achse (16) gegen die Kraft einer Haltefeder (17) drehbar und unter Einwirkung einer extremen Geschwindigkeitsänderung von einer schräg zum Gelenkhebel (6) ausgerichteten Ruhelage in eine senkrecht zum Gelenkhebel (6) ausgerichtete und sich mit seinem freien Ende daran abstützende Blockierlage schwenkbar ist.

3. Behältnis nach Anspruch 2, dadurch gekennzeichnet, daß das freie Ende des einarmigen Hebels (15) hammerkopfartig ausgebildet ist mit einem nach unten gerichteten Gewichtsschwerpunkt.
